# EUROPEAN PATENT APPLICATION

(11) **EP 4 813 703 A1**
(43) Date of publication of application: **30.09.2026**
(21) Application number: 26166654.9
(22) Date of filing: 23.03.2026
(51) Int. Cl.: B60K 1/04

(54) **VEHICLE STRUCTURE**

(30) Priority: 26.03.2025 JP 2025052173
(71) Applicant: Toyota Jidosha Kabushiki Kaisha, Toyota-shi, Aichi-ken 471-8571 (JP)
(72) Inventor: YAMAMOTO, Yo, Toyota-shi, Aichi-ken, 471-8571 (JP); YONEZAWA, Shota, Toyota-shi, Aichi-ken, 471-8571 (JP)
(74) Representative: TBK

(57) **Abstract**

A vehicle structure (10) comprises a battery case (14), a battery equipment case (24), a seat cushion (46), and a cross-member (40), the battery case (14) arranged along a floor (18) of a vehicle, a storage cell (16) being accommodated inside the battery case (14), the battery equipment case (24) disposed at an upper side of the battery case (14) at a cabin (22) side, equipment (34, 38) being accommodated inside the battery equipment case (24), the seat cushion (46) disposed at an upper side of the battery equipment case (24), and the cross-member (40) that spans in a vehicle width direction at a vehicle upper side relative to the battery case (14), an end portion at a vehicle front side of the battery equipment case (24) is fixed to the cross-member (40).

## Description

### BACKGROUND

### Technical Field

The present disclosure relates to a vehicle structure.

### Related Art

A storage battery device equipped with plural storage cells is disclosed in, for example, Japanese Patent Application Laid-Open (JP-A) No. 2020-173918.

The storage battery device recited in this document is provided at a lower side of a rear seat of a vehicle.

In a structure in which equipment configuring a storage battery device is provided at a lower side of a seat cushion, being able to suppress application of a load on the equipment from the side thereof at which the seat cushion is disposed is desirable.

The present disclosure provides a vehicle structure that may suppress application of a load to equipment from a side thereof at which a seat cushion is disposed.

### SUMMARY

A vehicle structure according to a first aspect comprises: a battery case arranged along a floor of a vehicle, a storage cell being accommodated inside the battery case; a battery equipment case disposed at an upper side of the battery case at a cabin side, first equipment being accommodated inside the battery equipment case; a seat cushion disposed at an upper side of the battery equipment case; and a cross-member that spans in a vehicle width direction at a vehicle upper side relative to the battery case, wherein an end portion at a vehicle front side of the battery equipment case is fixed to the cross-member.

In the vehicle structure according to the first aspect, the battery equipment case is provided at the side of the upper side of the battery case at the cabin side, and the equipment is accommodated inside the battery equipment case. The seat cushion is provided at the upper side of the battery equipment case, and the cross-member spans in the vehicle width direction at the vehicle upper side relative to the battery case. The end portion at the vehicle front side of the battery equipment case is fixed to the cross-member. In this structure, a portion of a load from the side at which the seat cushion is disposed may be taken up by the cross-member, via the battery equipment case. Therefore, application to the equipment of a load from the side thereof at which the seat cushion is disposed may be suppressed.

In a vehicle structure according to a second aspect, in the vehicle structure according to the first aspect, at least one member configuring the battery equipment case is formed of aluminium die casting.

In the vehicle structure according to the second aspect, the equipment that is close to the member formed of aluminium die casting may have higher heat dissipation than in a structure that does not have at least one member formed of aluminium die casting configuring a battery equipment case.

In a vehicle structure according to a third aspect, in the vehicle structure according to the second aspect, the battery equipment case comprises: a cover case disposed at an upper side of the equipment; and a battery equipment lower case disposed at a lower side of the equipment, wherein a thickness of the cover case is thinner than a thickness of the battery equipment lower case.

In the vehicle structure according to the third aspect, the cover case has a smaller thickness than the battery equipment lower case. Therefore, when a load is applied to the battery equipment case via the seat cushion, the cover case may deform and absorb the load.

In a vehicle structure according to a fourth aspect, in the vehicle structure according to the third aspect, a flexural rigidity, in a vehicle vertical direction of the cover case is set lower than a flexural rigidity, in the vehicle vertical direction of the battery equipment lower case.

In the vehicle structure according to the fourth aspect, because the flexural rigidity in the vehicle vertical direction of the cover case is set to be lower than the flexural rigidity in the vehicle vertical direction of the battery equipment lower case, when a load is applied to the battery equipment case via the seat cushion, the cover case may be deformed in the vehicle vertical direction more easily.

The vehicle structure according to the present disclosure has an excellent effect in that application of a load to equipment from a side thereof at which a seat cushion is disposed may be suppressed.

### BRIEF DESCRIPTION OF THE DRAWINGS

Exemplary embodiments of the present invention will be described in detail based on the following figures, wherein:

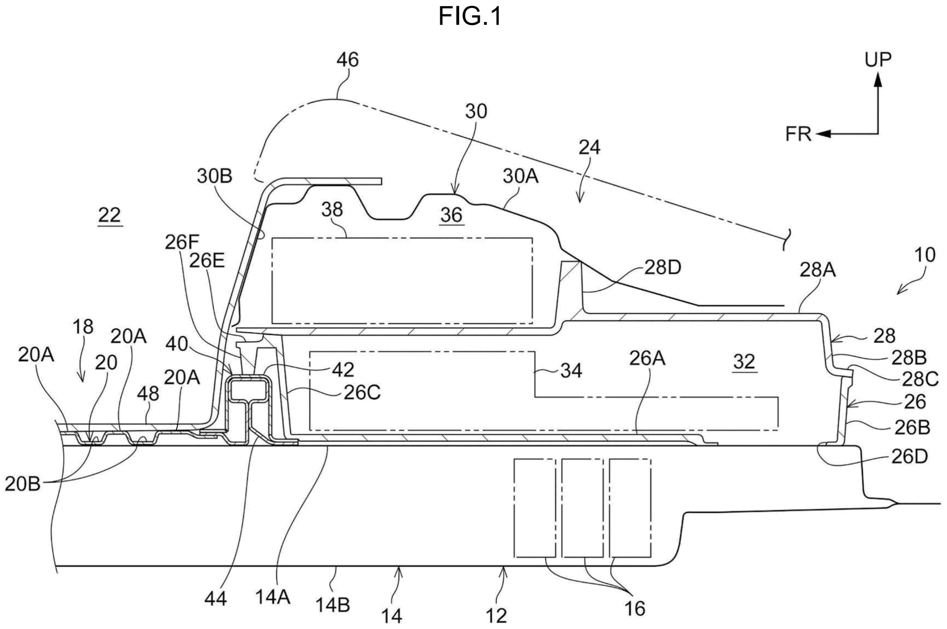

Fig. 1 is a sectional diagram showing a section, cut in a front-and-rear direction and a vertical direction, of a lower portion of a vehicle at a rear portion side of a cabin.

### DETAILED DESCRIPTION

A vehicle lower portion 10, at which a vehicle structure according to an exemplary embodiment of the present disclosure is employed, is described using Fig. 1. The arrow FR that is shown where appropriate in the drawings indicates a vehicle front side and the arrow UP indicates a vehicle upper side. In the descriptions below, where the terms front, rear, upper, lower, left and right are used without being particularly specified, the same refer to front and rear in the vehicle front-and-rear direction, upper and lower in the vehicle vertical direction, and left and right in the vehicle left-and-right direction (vehicle width direction).

As shown in Fig. 1, a battery pack 12 is provided at the vehicle lower portion 10. Electricity to be supplied to a motor of the vehicle is stored in the battery pack 12. The battery pack 12 comprises a battery case 14 that is formed in a box shape and plural storage cells 16 that are accommodated inside the battery case 14. The battery case 14 comprises an upper wall portion 14A that structures an upper portion of the battery case 14 and a lower wall portion 14B that structures a lower portion of the battery case 14. The upper wall portion 14A and lower wall portion 14B are formed in board shapes that extend in the front-and-rear direction and the left-and-right direction with thickness directions in the vertical direction. A plural number of the battery pack 12 are disposed between the upper wall portion 14A and lower wall portion 14B in a state in which the battery packs 12 are arrayed in the front-and-rear direction.

A floor formation member 20 is provided at the vehicle lower portion 10. The floor formation member 20 forms a floor 18 of the vehicle. The floor formation member 20 is disposed at the upper side of the battery case 14, along the upper wall portion 14A of the battery case 14. Plural protruding beads 20A along the vehicle width direction are formed at the floor forming member 20. The protruding beads 20A are formed in protruding shapes toward the upper side. Plural recessed beads 20B along the vehicle width direction are also formed at the floor formation member 20. The recessed beads 20B are formed in recessed shapes toward the lower side. The plural protruding beads 20A and plural recessed beads 20B are arranged to alternate in the front-and-rear direction.

A battery equipment case 24, in which battery equipment is accommodated, is provided at the upper side of the battery case 14, at a side of the battery case 14 at a cabin 22 side. The battery equipment case 24 comprises a battery equipment lower case 26, a battery equipment upper case 28 and a cover case 30. The battery equipment lower case 26 and battery equipment upper case 28 form a structure that is divided in the vertical direction. The cover case 30 covers the battery equipment upper case 28 from the upper side.

The battery equipment lower case 26 is formed of aluminium die casting, which is molded using an aluminium alloy. The battery equipment lower case 26 is provided with a lower wall portion 26A, a rear wall portion 26B and a front wall portion 26C. The lower wall portion 26A extends along the upper wall portion 14A of the battery case 14. The rear wall portion 26B extends toward the upper side from a rear end of the lower wall portion 26A. The front wall portion 26C extends toward the upper side from a front end of the lower wall portion 26A. An opening 26D is formed in a region at the rear side of the lower wall portion 26A. A harness or the like, which is not shown in the drawing, passes through the opening 26D. The battery equipment lower case 26 further comprises a front side flange portion 26E and a boss portion 26F. The front side flange portion 26E extends toward the front side from an upper end of the front wall portion 26C. The boss portion 26F protrudes toward the lower side from a region at the front side of the front side flange portion 26E.

The battery equipment upper case 28 is formed of aluminium die casting that is molded using an aluminium alloy, similarly to the battery equipment lower case 26. The battery equipment upper case 28 is provided with an upper wall portion 28A, a rear wall portion 28B and a rear side flange portion 28C. The upper wall portion 28A extends in the front-and-rear direction and the left-and-right direction. The rear wall portion 28B extends toward the lower side from a rear end of the upper wall portion 28A. The rear side flange portion 28C extends toward the rear side from a lower end of the rear wall portion 26B. The battery equipment upper case 28 further comprises an upper side projection portion 28D. The upper side projection portion 28D projects toward the upper side from a front-and-rear direction central portion of the upper wall portion 28A. The battery equipment upper case 28 is attached to the battery equipment lower case 26 from the upper side thereof. Thus, a first equipment arrangement cavity 32 is formed between the battery equipment upper case 28 and the battery equipment lower case 26. A junction box 34, which serves as equipment, first equipment and battery equipment, is disposed in the first equipment arrangement cavity 32. The junction box 34 is fixed to the lower wall portion 26A of the battery equipment lower case 26 via fixing members that are not shown in the drawing.

The cover case 30 is formed by machining such as press-forming of steel plate or the like. The cover case 30 is formed to have a smaller thickness than the battery equipment lower case 26 and battery equipment upper case 28 described above. The cover case 30 according to the present exemplary embodiment is a structure that is divided in the vehicle width direction (for example, a three-part structure). A flexural rigidity of the cover case 30 in the vehicle vertical direction is set lower than flexural rigidities in the vehicle vertical direction of the battery equipment lower case 26 and battery equipment upper case 28 described above. The cover case 30 is provided with an upper wall portion 30A and a front wall portion 30B. The upper wall portion 30A matches up in the vertical direction with the upper wall portion 28A of the battery equipment upper case 28. The front wall portion 30B extends toward the lower side from a front end of the upper wall portion 30A. The cover case 30 is attached to the battery equipment upper case 28 from the upper side thereof. Thus, a second equipment arrangement cavity 36 is formed between the cover case 30 and the battery equipment upper case 28. A charger 38, which serves as equipment, second equipment and charging equipment, is disposed in the second equipment arrangement cavity 36, at the front side of the upper side projection portion 28D. The charger 38 is fixed to the upper wall portion 28A of the battery equipment upper case 28 via fixing members that are not shown in the drawing.

A cross-member 40 spans in the vehicle width direction at the upper side relative to the upper wall portion 14A of the battery case 14, at the front side relative to the front wall portion 26C of the battery equipment lower case 26. The cross-member 40 comprises a first cross-member 42 and a second cross-member 44. In the side view shown in Fig. 1, the first cross-member 42 is formed in a hat shape in cross section, of which the lower side is open. The second cross-member 44 is joined to the first cross-member 42 in a state in which most of the second cross-member 44 is disposed inside the first cross-member 42. A rear end portion of the floor formation member 20 is joined to a front end portion of the cross-member 40. The front end portion of the battery equipment lower case 26 is fixed to the cross-member 40 by bolts that are not shown in the drawing being screwed into nuts that are not shown in the drawing. The nuts are provided at the cross-member 40, and the bolts are inserted into the front side flange portion 26E and boss portion 26F of the battery equipment lower case 26 from the upper side.

A seat cushion 46 structures a portion of a rear seat of the vehicle. The seat cushion 46 is provided at the upper side of the cover case 30. A carpet 48 is provided at the lower side of the seat cushion 46. The carpet 48 covers the battery equipment case 24 and the cross-member 40 from the front side thereof and covers the floor formation member 20 from the upper side thereof.

A gap in the vertical direction between the battery equipment upper case 28 and the seat cushion 46 at a front side end portion of the charger 38 is set to be wider than a gap in the vertical direction between the battery equipment upper case 28 and the seat cushion 46 at a rear side end portion of the charger 38. The gap in the vertical direction between the battery equipment upper case 28 and the seat cushion 46 widens from the rear side end portion of the charger 38 toward the front side end portion of the charger 38.

### - Operation and Effects of the Present Exemplary Embodiment -

Now, operation and effects of the present exemplary embodiment are described.

In the exemplary embodiment described above, the charger 38 is fixed to the battery equipment upper case 28 in a state in which the charger 38 is disposed at the upper side relative to the junction box 34. In this structure, maintenance of the charger 38 may be conducted more easily from the side at the cabin 22 side than in a structure in which, similarly to the junction box 34, the charger 38 is disposed at the lower side of the first equipment arrangement cavity 32 and the battery equipment case 24. To describe this in more detail, in the present exemplary embodiment, the cover case 30 may be detached from the battery equipment upper case 28 and maintenance of the charger 38 may be conducted. Maintenance of the junction box 34 may also be conducted by detaching the battery equipment upper case 28 from the battery equipment lower case 26. Thus, in the vehicle structure according to the present exemplary embodiment, maintenance of various kinds of equipment may be made easier.

In the present exemplary embodiment, the charger 38 is fixed to the upper wall portion 28A in a state in which the charger 38 is disposed at the upper side of the upper wall portion 28A in a region at the front side of the battery equipment upper case 28. Therefore, maintenance of the charger 38 may be conducted easily from the side thereof at the cabin 22 side.

In the present exemplary embodiment, the gap in the vertical direction between the battery equipment upper case 28 and the seat cushion 46 at the front side end portion of the charger 38 is set wider than the gap in the vertical direction between the battery equipment upper case 28 and the seat cushion 46 at the rear side end portion of the charger 38. With this structure, a working space during maintenance of the charger 38 may be made larger.

In the present exemplary embodiment, the gap in the vertical direction between the battery equipment upper case 28 and the seat cushion 46 widens from the rear side end portion of the charger 38 toward the front side end portion of the charger 38. With this structure, the working space during maintenance of the charger 38 may be made even larger.

In the present exemplary embodiment, because the cover case 30 is a structure that is divided in the vehicle width direction, ease of operations when bringing the cover case 30 into the cabin 22 and ease of operations when taking the cover case 30 out of the cabin 22 may be excellent.

In the present exemplary embodiment, because the charger 38 is covered from the upper side by the cover case 30, the charger 38 may be protected by the cover case 30.

In the present exemplary embodiment, the battery equipment lower case 26 and battery equipment upper case 28 forming the first equipment arrangement cavity 32 are formed of aluminium die casting. With this structure, heat dissipation from the junction box 34 may be improved compared to a structure in which the battery equipment lower case 26 and the battery equipment upper case 28 are not formed of aluminium die casting.

In the present exemplary embodiment, the battery equipment case 24 is provided at the upper side of the battery case 14, at the side thereof at the cabin 22 side, and the various kinds of equipment (the junction box 34 and charger 38 or the like) are accommodated inside the battery equipment case 24. The seat cushion 46 is provided at the upper side of the battery equipment case 24, and the cross-member 40 spans in the vehicle width direction at the vehicle upper side relative to the battery case 14. Because the front end portion of the battery equipment lower case 26 is fixed to the cross-member 40, a load from a region at the front side of the battery equipment lower case 26 and battery equipment upper case 28 forming the battery equipment case 24 may be taken up by the cross-member 40. With this structure, a portion of a load from the side at which the seat cushion 46 is disposed may be taken up by the cross-member 40, via the battery equipment case 24. Therefore, application to the various kinds of equipment of a load from the side thereof at which the seat cushion 46 is disposed may be suppressed.

In the present exemplary embodiment, the cover case 30 is formed with a thickness smaller than thicknesses of the battery equipment lower case 26 and the battery equipment upper case 28. Therefore, when a load is applied to the battery equipment case 24 from the side thereof at which the seat cushion 46 is disposed, the cover case 30 may deform and absorb the load.

In the present exemplary embodiment, the flexural rigidity in the vehicle vertical direction of the cover case 30 is set lower than the flexural rigidities in the vehicle vertical direction of the battery equipment lower case 26 and the battery equipment upper case 28. Therefore, when a load is applied to the battery equipment case 24 from the side thereof at which the seat cushion 46 is disposed, the cover case 30 may deform more easily.

Note that parts of the structures of the present exemplary embodiment as described above may be omitted or modified.

An exemplary embodiment of the present disclosure is described above. However, the present disclosure is not limited by these descriptions and it will be clear that numerous modifications beyond these descriptions may be embodied within a technical scope not departing from the gist of the invention.

## Claims

1. A vehicle structure (10) comprising:
a battery case (14) arranged along a floor (18) of a vehicle, a storage cell (16) being accommodated inside the battery case (14);
a battery equipment case (24) disposed at an upper side of the battery case (14) at a cabin (22) side, equipment (34, 38) being accommodated inside the battery equipment case (24);
a seat cushion (46) disposed at an upper side of the battery equipment case (24); and
a cross-member (40) that spans in a vehicle width direction at a vehicle upper side relative to the battery case (14),
wherein an end portion at a vehicle front side of the battery equipment case (24) is fixed to the cross-member (40).

2. The vehicle structure (10) according to claim 1, wherein at least one member (26, 28) configuring the battery equipment case (24) is formed of aluminium die casting.

3. The vehicle structure (10) according to claim 2, wherein the battery equipment case (24) comprises:
a cover case (30) disposed at an upper side of the equipment; and
a battery equipment lower case (26) disposed at a lower side of the equipment (36, 38),
wherein a thickness of the cover case (30) is thinner than a thickness of the battery equipment lower case (26).

4. The vehicle structure (10) according to claim 3, wherein a flexural rigidity, in a vehicle vertical direction, of the cover case (30) is set lower than a flexural rigidity, in the vehicle vertical direction, of the battery equipment lower case (26).
